# EUROPÄISCHE PATENTSCHRIFT

(11) **EP 1 910 630 B1**
(45) Veröffentlichungstag und Bekanntmachung des Hinweises auf die Patenterteilung: **10.09.2014**
(21) Anmeldenummer: 06776392.0
(22) Anmeldetag: 25.07.2006
(51) Int. Cl.: E04D 12/00, B32B 33/00

(54) **VERFAHREN ZUR HERSTELLUNG EINER BAHN**
METHOD FOR THE PRODUCTION OF A WEB
PROCEDE DE FABRICATION D'UN PANNEAU

(30) Priorität: 25.07.2005 DE 102005035246
(43) Veröffentlichungstag der Anmeldung: 16.04.2008
(73) Patentinhaber: EWALD DÖRKEN AG, 58313 Herdecke (DE)
(72) Erfinder: SCHRÖER, Jörn, 58313 Herdecke (DE); LAUR, Rüdiger, 44225 Dortmund (DE); SCHWAAB, Gilles, 44225 Dortmund (DE)
(74) Vertreter: Von Rohr Patentanwälte Partnerschaft mbB
(86) Internationale Anmeldenummer: PCT/EP2006/007323
(87) Internationale Veröffentlichungsnummer: WO 2007/012463

(56) Entgegenhaltungen:
- EP-A2- 0 570 215
- WO-A2-97/30244
- DE-U1- 29 805 622

## Beschreibung

Die Erfindung betrifft Verfahren zur Herstellung einer Bahn , wobei die Bahn zumindest eine Schutzschicht, eine Funktionsschicht und eine Verstärkungsschicht aufweist.

Aus der EP-A-570 215 ist bereits ein Verfahren zum Herstellen einer Bahn bekannt, wobei die Bahn eine Schutzschicht, eine Funktionsschicht und eine Verstärkungsschicht aufweist. Dabei ist vorgesehen, dass die Verstärkungsschicht eine höhere Reißfestigkeit als die Schutzschicht aufweist, die Verstärkungsschicht mit der Funktionsschicht verklebt wird und die Funktionsschicht mit der Schutzschicht durch Thermokaschierung verschweißt wird, wobei das so erhaltene Vorlaminat anschließend mit der Verstärkungsschicht verklebt wird.

Aus der DE-U-298 05 622 ist ein Verfahren zur Herstellung einer Bahn bekannt, wobei die Bahn eine Schutzschicht, eine Funktionsschicht, eine Verstärkungsschicht und eine weitere Schutzschicht aufweist. Dabei ist vorgesehen, dass zwischen benachbarten Schichten ein Haftvermittler angeordnet wird, der beim Kaschieren aufschmilzt und so alle Schichten in einem Verfahrensschritt miteinander verbindet.

Bahnen der vorgenannten Art werden unter anderem bei dem Neubau, der Sanierung, der Umdeckung und dem nachträglichen Ausbau eines Daches als Unterspann- oder Unterdeckschalungsbahnen, als Wasser- und/oder Dampf- und/oder Luftsperre oder als Fassadenbahnen eingesetzt. Die vorgenannten Bahnen weisen wenigstens eine sogenannte Funktionsschicht auf, die beispielsweise die Wasserdichtigkeit der Bahn gewährleisten soll. Darüber hinaus kann die Funktionsschicht auch derart ausgebildet sein, dass zwar der Durchtritt von flüssigem Wasser verhindert wird, gleichzeitig jedoch eine ausreichende Dampfdurchlässigkeit gewährleistet ist, um beispielsweise das Abwandern von Feuchte aus der Dachkonstruktion zu ermöglichen. Durch eine geeignete Ausbildung der Bahn kann darüber hinaus Einfluss auf die Luftwechselrate und die Sauerstoffdurchlässigkeit durch die Bahn genommen werden. Im Ergebnis ist es durch die Verwendung der vorgenannten Bahnen möglich, Energieverluste zu senken und das Wohnklima unter dem Dach zu verbessern.

Die Funktionsschicht als solche weist in der Regel eine geringe Festigkeit auf und muss zum einen gegen Abrieb und gegen mechanische Beschädigung, insbesondere beim Verlegen der Bahn, und zum anderen gegen ein Zerreißen beim Herstellungsprozess und/oder bei der anschließenden Verlegung der Bahn geschützt werden. Zum Schutz gegen Abrieb ist in der Regel vorgesehen, die Funktionsschicht mit einer Schutzschicht, beispielsweise einem Vlies, zu verkleben. Dabei handelt es sich bei einem Vlies um miteinander verbundene Fasern und/oder Fäden, wobei der die Fasern und/oder Fäden aufweisende Faserflor thermisch, mechanisch oder chemisch verfestigt werden kann. Beispielsweise werden bei der Herstellung spitzverbundener, nicht-gewebter Vliesstoffe kontinuierliche Fäden aus einem thermoplastischen Polymer, beispielsweise Polypropylen, durch Spinndüsen extrudiert, um einen losen Flor zu bilden, welcher anschließend in einem kontinuierlichen Verfahren durch Wärme und Druck zu einem fertigen Vlies verfestigt wird. Das thermische Verbinden von thermoplastischen Fäden kann durch gleichmäßiges Beaufschlagen von Wärme und Druck über den gesamten Bereich erreicht werden, oder durch unterbrochenes Beaufschlagen von Wärme und Druck, so dass nur diskrete Bereiche des Stoffes verbunden werden. Das diskrete Verbinden, das üblicherweise als Punktverbinden bezeichnet wird, verleiht dem Material eher einen textilen Charakter im Vergleich zur gesamtflächigen Verbindung. Die Punktverbindung wird meist durch ein Kalandersystem erreicht, welches wenigstens zwei beheizte Kalanderrolten umfasst, von denen die eine eine ebene Oberfläche und die andere eine Oberfläche mit erhöhter Prägestruktur aufweist, so dass das lose textile Material aus Fasern oder Fäden während des Passierens durch den Walzenspalt zwischen den beiden Kalanderrollen verschweißt wird. Dieses Verfahren ist für thermoplastische Polymere, beispielsweise Polypropylen, Polyethylen, Polyamid oder Polyester, geeignet.

Ist die Funktionsschicht mit einem Vlies oder einem Gewebe oder dergleichen verbunden, wird durch das Vlies eine Beschädigung der Funktionsschicht durch Abrieb weitgehend ausgeschlossen. Dennoch kann es aufgrund von Zugkräften bei der Herstellung der Bahn oder beim Verlegen auch nach dem Verkleben der Funktionsschicht mit dem Vlies dazu kommen, dass der so hergestellte Schichtverbund zerreist. Zwar ist es grundsätzlich möglich, die Funktionsschicht mit einem Vlies mit höherer Schichtdicke zu verkleben, was jedoch aufwendig ist und zu höheren Herstellungskosten führt.

Ein günstigeres Reißkraft-Kostenverhältnis bieten Gewebe oder Gelege, z.B. aus Filamenten oder Bändchen, oder als Netz, wobei das Gewebe oder Gelege oder Netz als Verstärkungsschicht mit der Funktionsschicht verbunden wird. Damit entsteht ein Schichtverbund aus dem Vlies, der Funktionsschicht und der Verstärkungsschicht. Das Vlies gewährleistet als Schutzschicht einen Schutz gegen Abrieb, während die Verstärkungsschicht eine ausreichende Reißfestigkeit des Schichtverbundes sicherstellt. Dabei weist die Verstärkungsschicht eine höhere Reißfestigkeit als das Vlies auf.

Aus der EP 0 169 308 A2 ist eine Unterspannbahn aus Kunststoff bekannt, die eine Polyurethanfolie, eine Vliesschicht und ein Netz aufweist, wobei das Netz zwischen der Polyurethanfolie und der Vliesschicht angeordnet ist. Zum Herstellen der bekannten Unterspannbahn wird die Polyurethanfolie einseitig auf eine Vliesschicht im Wege des Extrudierens aufgebracht und mit dieser stoffschlüssig und ohne Verbindungshilfsmittel verbunden. Bei der Fertigung wird auf die dünne Vliesschicht das Netzt aufgelegt und die Polyurethanfolie auf diese Sicht extrudiert, wobei sie eine innige Verbindung mit der Vliesschicht eingeht und das Netz durch die verbundenen Schichten gehalten ist. Von Nachteil bei dem bekannten Verfahren ist, dass eine sehr dicke Funktionsschicht erforderlich ist, um Undichtigkeiten zu vermeiden.

Aus der EP 0 797 713 B1 ist ebenfalls eine Unterspannbahn bekannt, die eine wasserdichte, aber dampfdurchlässige Diffusionsfolie aufweist. Auf einer der Folienseiten ist eine Kunststoffarmierung in Form eines heiß aufgesiegelten Gitters vorgesehen. Die Armierung besteht aus einem thermisch ansprechenden Kunststoff, z.B. einem Gelege aus Polypropylen, das ein oder beidseitig mit einem Haftvermittler beschichtet sein kann. Die Armierung wird zumindest bis auf den Siegel-Schmelzpunkt erwärmt und anschließend über Andrückwalzen mit der Diffusionsfolie kaschiert. Bei dem Kaschiervorgang kommt es zu einer Verformung der Armierung. Von Nachteil ist, dass der Verbund aus der Diffusionsfolie und dem Gitter eine nur geringe Festigkeit aufweist.

Die Filamente oder Bändchen, die als Gewebe oder Gelege oder Netz die Verstärkungsschicht bilden, weisen in der Regel eine größere Dicke und einen größeren Titer als die Vliesfasern auf. Eine Verbindung der Verstärkungsschicht mit der Funktionsschicht durch Kaschieren oder Extrudieren kann daher dazu führen, dass die Filamente oder Bändchen der Verstärkungsschicht beschädigt werden oder dass es zu einer Beschädigung der Funktionsschicht kommt. Dies kann zur Folge habe, dass die Festigkeit oder die Funktionalität des Bandes gefährdet wird.

Darüber hinaus ist aus dem Stand der Technik bekannt, die Verstärkungsschicht mit der Funktionsschicht zu verkleben. Dabei kommen Verfahren der Pulverbeschichtung zum Einsatz, wobei von oben durch Öffnungen der Verstärkungsschicht hindurch ein Klebstoff auf die darunter angeordnete Funktionsschicht aufgestreut wird. Anschließend werden die Verstärkungsschicht und die Funktionsschicht miteinander verklebt. Zum Verkleben wird die Verstärkungsschicht und die Funktionsschicht einem Walzensystem zugeführt, wobei der Anpressdruck der Walzen jedoch so gering ist, dass es nicht zu einer Beschädigung der Filamente oder Bändchen der Verstärkungsschicht oder zu einer Beschädigung der Funktionsschicht kommen kann. Von Nachteil bei dem vorbeschriebenen Verfahren ist, dass die so erhaltene Klebverbindung zwischen der Verstärkungsschicht und der Funktionsschicht eine geringe Festigkeit aufweist. Dies ist insbesondere beim Verlegen der Bahnen von großer Bedeutung, da beim Verlegen die höchsten Reißkräfte auftreten können. Auch kommt es oft vor, dass die Klebverbindungen nicht dauerhaft halten. Kommt es zu einem Lösen der Verbindung, wird die empfindliche Funktionsschicht nicht mehr geschützt. Darüber hinaus ist es so, dass bei Bahnen, die eine Mehrzahl von Schichten aufweisen, das Verkleben der einzelnen Schichten miteinander zu einem entsprechend hohen Klebstoffverbrauch führt, was in Folge der hohen Klebstoffkosten zu höheren Herstellungskosten der Bahn beiträgt. Im übrigen sind entsprechende Auftragsvorrichtungen und/oder eine Mehrzahl von Verfahrensschritten notwendig, um das Verkleben der Schichten miteinander zu ermöglichen.

Aufgabe der vorliegenden Erfindung ist es, ein Verfahren zur Herstellung einer Bahn der eingangs genannten Art zur Verfügung zu stellen, mit dem es möglich ist, eine Bahn der eingangs genannten Art einfach und bei geringen Herstellungskosten herzustellen, wobei die so hergestellte Bahn einen hohen Schutz gegen Abrieb, mechanische Beschädigung und gegen Zerreißen der Funktionsschicht gewährleistet.

Die vorgenannte Aufgabe ist bei durch die Merkmale von Anspruch 1 oder Anspruch 2 gelöst.

Die Funktionsschicht wird mit der Schutzschicht nicht durch Verkleben, sondern durch Thermokaschierung verbindet, was zu einer Einsparung an Klebstoff und zu einer Vereinfachung des Verfahrensablaufs führt. Darüber hinaus ist eine dauerhafte Verbindung zwischen der Funktionsschicht und der Schutzschicht gewährleistet. Durch Thermokaschierung wird die Funktionsschicht vorzugsweise punktförmig mit der Schutzschicht verschweißt, wobei grundsätzlich die Verbindungsstellen zwischen der Funktionsschicht und der Schutzschicht auch nicht-punktförmig ausgebildet sein können. Das Vorlaminat selbst wird mit der Verstärkungsschicht verklebt, und zwar durch Öffnungen der Verstärkungsschicht hindurch.

Das durch Thermokaschierung in einem Kalandersystem hergestellte Vorlaminat gewährleistet einen dauerhaften Schutz der Funktionsschicht gegen Abrieb und führt darüber hinaus zu einer Verstärkung der Funktionsschicht, was sich vereinfachend auf den Herstellungsvorgang einer erfindungsgemäßen Bahn auswirkt Im Zusammenhang mit der Erfindung ist unter dem Begriff Bahn ein Laminat aus mehreren Lagen gleicher oder verschiedener Materialien zu verstehen, wobei das Laminat eine Funktionsschicht, eine Verstärkungsschicht und eine Schutzschicht aufweisen soll.

Die Verstärkungsschicht wird nach dem Verkleben mit dem Vorlaminat mit einer weiteren Schicht, vorzugsweise einer weiteren Schutzschicht, verklebt. Zur Verfahrensvereinfachung ist dabei vorgesehen, dass das Vorlaminat in einem Verfahrensschritt mit der Verstärkungsschicht und die Verstärkungsschicht mit der weiteren Schicht verklebt wird.

Vorzugsweise ist vorgesehen, dass die Funktionsschicht auf beiden Seiten jeweils mit einer Schutzschicht verschweißt wird, um das Vorlaminat zu erhalten. Die Funktionsschicht ist dann zwischen zwei Schutzschichten eingebettet, wobei die Verstärkungsschicht mit einer Schutzschicht des Vorlaminates verbunden wird. Dies hat den Vorteil, dass die Funktionsschicht besser gegen Beschädigungen durch die relativ groben Filamente der Verstärkungsschicht, insbesondere an deren Knotenpunkten, geschützt ist. Grundsätzlich kann es jedoch auch vorgesehen sein, dass die Funktionsschicht einseitig mit einer Schutzschicht verschweißt wird und dass das so erhaltene Vorlaminat anschließend auf der Seite der Funktionsschicht mit der Verstärkungsschicht verklebt wird.

Bei einer besonders bevorzugten Ausführungsform der Erfindung ist vorgesehen, dass die Thermokaschierung Inline ausgeführt wird. In einem Verfahrensschritt wird dabei ein Fäden oder Fasern aufweisender Faserflor zu einer Schutzschicht verfestigt und mit der Funktionsschicht verbunden. Möglichst in einem Arbeitsgang kann die Funktionsschicht auf beiden Seiten mit einer äußeren Schutzschicht thermisch verbunden werden. Dadurch wird das Verfahren zur Herstellung einer erfindungsgemäßen Bahn weiter vereinfacht und der Herstellungsaufwand reduziert. Grundsätzlich ist es natürlich auch möglich, dass der Faserflor in einem Offline geführten Kaschiervorgang zunächst verfestigt wird und die so erhaltene(n) Schutzschicht(en) anschließend mit der Funktionsschicht in einem weiteren Kaschiervorgang verbunden bzw. bereichsweise verschweißt wird bzw. werden.

Alle nachfolgenden Ausführungen können eine Bahn betreffen, bei der ein Vorlaminat mit der Verstärkungsschicht verklebt ist, wobei das Vorlaminat zumindest eine ein- oder beidseitig mit einer Schutzschicht verbundene Funktionsschicht aufweist. Die Verstärkungsschicht kann dabei mit der Funktionsschicht (bei einseitiger Beschichtung) oder mit einer Schutzschicht (bei beidseitiger Beschichtung der Funktionsschicht) verklebt sein.

Bei einer bevorzugten Ausführungsform eines Verfahrens der eingangs genannten Art ist zur Lösung der vorgenannten Aufgabe vorgesehen, dass ein Klebstoff derart auf die Funktionsschicht oder die Schutzschicht und/oder auf die Verstärkungsschicht in nachfolgend angegebener Weise aufgebracht wird, dass beim nachfolgenden Verbinden der Verstärkungsschicht mit der Funktionsschicht oder der Schutzschicht gemeinsame Berührungsflächen der verbundenen Schichten im wesentlichen vollflächig miteinander verklebt werden.

Der Erfindung liegt an dieser Stelle der Grundgedanke zugrunde, die Verstärkungsschicht auf der Seite der Funktionsschicht bzw. der Schutzschicht möglichst vollständig mit der Funktionsschicht oder der Schutzschicht zu verkleben. Funktions- und Schutzschicht(en) können zuvor zu einem Vorlaminat verbunden worden sein, insbesondere durch Thermokaschierung. Es kommt darauf an, den Klebstoff zumindest auf die Bereiche der Oberfläche der jeweiligen Schicht(en) aufzubringen, die nach dem Verbinden der Schichten miteinander in Kontakt treten. Durch das erfindungsgemäße Verfahren lässt sich eine sehr gute, über die ganze Fläche homogene Haftung zwischen den verklebten Schichten gewährleisten, was zu einer hohen Festigkeit der erfindungsgemäßen Bahn beiträgt. In diesem Zusammenhang ist es grundsätzlich vorgesehen, die aufgebrachte Klebstoffmenge weitgehend zu minimieren, was zu einem geringeren Klebstoffverbrauch und damit zu geringeren Herstellungskosten führt. Wesentlich ist jedoch, dass der Klebstoff in ausreichender Menge und mit einer ausreichenden Verteilung aufgebracht wird, um das Verkleben der Schichten im wesentlichen an allen Berührungspunkten zu ermöglichen.

Bei einer Ausführungsform der vorgenannten Erfindung ist vorgesehen, dass der Klebstoff derart aufgesprüht oder aufgestreut und derart verwirbelt wird, dass sich ein im wesentlichen vollflächiger Klebstoffauftrag auf den Berührungsflächen der Funktionsschicht oder der Schutzschicht und/oder den Berührungsflächen der Verstärkungsschicht ergibt. Um das Verwirbeln des Klebstoffs sicherzustellen, wird im Bereich der Verstärkungsschicht und/oder der Funktionsschicht oder der Schutzschicht eine Wirbelströmung erzeugt, die zu einer Verteilung des Klebstoffs auf den Berührungsflächen führt.

Bei einer weiteren Ausführungsform der vorgenannten Erfindung ist vorgesehen. dass der Klebstoff derart aufgesprüht oder aufgestreut und die Funktionsschicht oder die Schutzschicht und/oder die Verstärkungsschicht derart elektrostatisch aufgeladen werden, dass sich ein im wesentlichen vollflächiger Klebstoffauftrag auf den Berührungsflächen ergibt. Bei der letztgenannten Ausführungsform ist es nicht notwendig, eine Wirbelströmung zu erzeugen, um den Klebstoff zu verwirbeln. Das Anhaften von Klebstoffpartikeln oder Klebstoffäden im Bereich der Berührungsflächen wird durch die elektrostatische Aufladung sichergestellt. Grundsätzlich ist eine im wesentlichen vollflächige Verklebung der gemeinsamen Berührungsflächen jedoch auch dadurch möglich, dass der Klebstoff auf die Schicht(en) aufgestrichen wird oder dass die Schicht, insbesondere die Verstärkungsschicht, in den Klebstoff eingetaucht wird.

Bei einer besonders bevorzugten Ausführungsform der Erfindung ist vorgesehen, dass der Klebstoff durch Öffnungen der Verstärkungsschicht hindurch auf die Funktionsschicht oder die Schutzschicht und/oder auf die den vorgenannten Schichten zugewandte Seite der Verstärkungsschicht aufgebracht wird. Zwar ist es auch bei den aus dem Stand der Technik bekannten Verfahren zur Pulverbeschichtung vorgesehen, durch Öffnungen der Verstärkungsschicht hindurch Klebstoff auf die Funktionsschicht aufzubringen und diese dann mit einer weiteren äußeren Schicht über die freien Bereiche der Verstärkungsschicht zu verkleben, wobei die Verstärkungsschicht zwischen der Funktionsschicht und der weiteren Schicht fixiert wird. Bei den bekannten Verfahren ist es jedoch so, dass der Klebstoff derart aufgebracht wird, dass sich unterhalb geschlossener Bereiche der Verstärkungsschicht kein Klebstoff auf der Funktionsschicht befindet. Die gemeinsamen Berührungsflächen der Verstärkungsschicht und der Funktionsschicht verkleben daher nicht unmittelbar miteinander, was dazu führt, dass der Schichtverbund aus Funktionsschicht, Verstärkungsschicht und einer äußeren weiteren Schicht eine nicht maximale Festigkeit aufweist.

Der Erfindung liegt dagegen der Grundgedanke zugrunde, den Klebstoff derart durch die Öffnungen der Verstärkungsschicht hindurch auf die Funktionsschicht oder die Schutzschicht und/oder auf die Verstärkungsschicht aufzubringen, dass eine Verklebung der nicht-geöffneten Bereiche der Verstärkungsschicht mit der Funktionsschicht oder der Schutzschicht sichergestellt ist. Der Klebstoff kann dabei derart aufgesprüht oder aufgestreut und derart verwirbelt werden, dass er auf, zwischen und unter den Filamenten oder Bändchen der Verstärkungsschicht auftrifft. Damit lässt sich eine sehr gute, über die gesamte Fläche homogene Haftung zwischen den zu verklebenden Lagen erzielen.

Die von der Funktionsschicht abgewandte Seite der Verstärkungsschicht wird mit wenigstens einer weiteren Schicht, vorzugsweise einer weiteren Schutzschicht, verklebt, wobei ein vier- oder fünfschichtiger Verbund erhalten wird. Bei einer gleichwirkenden Ausführungsform des erfindungsgemäßen Verfahrens kann vorgesehen sein, dass ein Klebstoff auf die weitere Schicht und/oder auf die der weiteren Schicht zugewandte Seite der Verstärkungsschicht aufgebracht wird und nachfolgend zunächst die Verstärkungsschicht mit der weiteren Schicht verklebt wird. Dabei wird erfindungsgemäße der Klebstoff derart aufgebracht, dass sich beim nachfolgenden Verbinden der Verstärkungsschicht mit der weiteren Schicht eine im wesentlichen vollflächige Verklebung der gemeinsamen Berührungsflächen ergibt. Anschließend kann dann der so erhaltene Schichtverbund mit der Funktionsschicht oder der Schutzschicht bzw. dem Vorlaminat verklebt werden.

Um das erfindungsgemäße Verfahren zur Herstellung einer Bahn zu vereinfachen, kann vorgesehen sein, dass der Klebstoff in einem Verfahrenschritt, d.h. gleichzeitig, auf beide Schichtseiten der Verstärkungsschicht aufgebracht wird. Durch den beidseitig aufgebrachten Klebstoff ist es möglich, die Verstärkungsschicht sowohl mit der Funktionsschicht oder der Schutzschicht als auch mit der weiteren Schicht über gemeinsame Berührungsflächen im wesentlichen vollflächig miteinander zu verkleben, wodurch sich eine hohe Haftung zwischen den Schichten ergibt. Grundsätzlich ist es natürlich auch möglich, dass die weitere Schicht durch die Öffnungen der Verstärkungsschicht hindurch mit der Funktionsschicht oder der Schutzschicht verklebt wird, ohne zuvor eine beidseitige Klebstoffbeschichtung der Verstärkungsschicht vorzusehen. Der innerhalb der Öffnungen der Verstärkungsschicht bestehende flächige Verbund zwischen der Funktionsschicht oder der Schutzschicht und der weiteren Schicht beträgt dabei zu einer hohen Haftung zwischen den zu verklebenden Schichten bei.

Zur weiteren Verfahrensvereinfachung kann vorgesehen sein, dass die Verstärkungsschicht in einem Verfahrensschritt bzw. gleichzeitig mit der Funktionsschicht oder der Schutzschicht und der weiteren Schicht verklebt wird. Grundsätzlich ist es natürlich auch möglich, dass die Verstärkungsschicht in nachfolgenden Verfahrensschritten zunächst mit der Funktionsschicht oder der Schutzschicht und anschließend mit der weiteren Schicht verklebt wird.

Der Klebstoff wird vorzugsweise derart aufgebracht, dass sich eine diffusionsoffene Bahn ergibt. Hier kommt es im wesentlichen darauf an, dass mikroskopisch kleine Bereiche frei bleiben, die eine Diffusion von Wasserdampf oder auch von Sauerstoff durch die Bahn hindurch ermöglichen.

Bei der Schutzschicht kann es sich um ein Vlies oder ein Gewebe oder eine Mikrofaserschicht handeln. Die Funktionsschicht ist vorzugsweise wasserdicht. Die Wassersäule, die auf der Funktionsschicht lasten kann, bevor es zu einem Durchtritt von flüssigem Wasser kommt, beträgt erfindungsgemäß zumindest 200 mm. Darüber hinaus kann die Funktionsschicht wasserdampfdurchlässig sein, wobei, vorzugsweise, die Wasserdampfdurchlässigkeit der Funktionsschicht zumindest 80 g/m² * 24h betragen kann. Darüber hinaus ist es grundsätzlich auch möglich, dass die Wasserdampfdurchlässigkeit der Funktionsschicht abhängig von der Umgebungsfeuchte ist oder dass die Funktionsschicht nicht-diffusionsoffen ist. In diesem Fall ist die Funktionsschicht vollständig wasserdicht, so dass es im wesentlichen auch nicht zu einem Durchtritt von Wasserdampf kommen kann.

Bei der Verstärkungsschicht kann es sich um ein vorzugsweise offenes Gewebe oder Gelege, insbesondere aus Mono- oder Multifilamenten oder bandförmigen Streifen handeln. Als Verstärkungsschicht kann auch ein vorzugsweise extrudiertes Netz vorgesehen sein. Die Verstärkungsschicht kann Öffnungen mit einer Querschnittsfläche von wenigstens 1 mm², vorzugsweise von wenigstens 3 mm², aufweisen, um das Aufbringen von Klebstoff durch die Öffnungen der Verstärkungsschicht hindurch auf die Funktionsschicht und/oder auf eine weitere Schicht zu ermöglichen. Das Flächenverhältnis aus öffnungsflächen zu geschlossenen Flächen der Verstärkungsschicht kann 1:1 betragen. Grundsätzlich ist es natürlich auch möglich, dass der Flächenanteil der offenen Bereiche der Verstärkungsschicht an der Gesamtfläche der Verstärkungsschicht größer als der Flächenanteil der geschlossenen Flächen ist. Die Verstärkungsschicht kann eine Reißfestigkeit von zumindest 150 N/5 cm aufweisen, wobei, vorzugsweise, das Verhältnis der Reißfestigkeit der Schutzschicht zur Reißfestigkeit der Verstärkungsschicht wenigstens 1:1,5, insbesondere wenigstens 1:2, betragen kann. Erfindungsgemäß ist in diesem Zusammenhang vorzugsweise vorgesehen, dass das Verhältnis des Titers von Filamenten der Schutzschicht zum Titer von Filamenten der Verstärkungsschicht zumindest 1:10, vorzugsweise 1:20, insbesondere 1:50, betragen kann.

Grundsätzlich ist die Belüftung eines Daches von wachsender Bedeutung. Vorzugsweise ist es in diesem Zusammenhang vorgesehen, dass die erfindungsgemäße Bahn nicht nur die Diffusion von Wasserdampf, sondern auch die Diffusion von Sauerstoff durch die Bahn hindurch ermöglicht. Die Sauerstoffdurchlässigkeit der erfindungsgemäßen Bahn kann im Zusammenhang mit der Belüftung des Daches von besonderem Vorteil sein.

Erfindungsgemäß kann die Bahn weitere Schichten aufweisen, die vorzugsweise die Dampfdurchlässigkeit der erfindungsgemäßen Bahn nicht wesentlich beeinträchtigen. Darüber hinaus ist es möglich, dass als weitere Schicht eine Strahlenschutzschicht vorgesehen ist, beispielsweise eine Vakuumbeschichtung mit einem Metall, die auf der Oberseite einer Schutzschicht für die Reflektion von Infrarotstrahlung und/oder zur Abschirmung elektromagnetischer Strahlung angeordnet sein kann. Die zuvor beschriebene Ausführungsform einer erfindungsgemäßen Bahn kann darüber hinaus den Luft- und/oder Dampfübertritt durch die Bahn vollständig verhindern. Schließlich kann die erfindungsgemäße Bahn Stabilisatoren, Flammhemmer oder Farbmittel aufweisen.

Um die Verlegung der erfindungsgemäßen Bahn zu vereinfachen, kann die Bahn vollflächig oder bereichsweise, insbesondere an den Rändern, eine Haftklebeschicht aufweisen. Es kann sich um einen aufgetragenen Klebstoff handeln oder aber um einen Streifen, welcher beiderseits eine Selbstklebeschicht als Haftklebeschicht aufweist und im übrigen rückseitig durch einen üblichen Schutzstreifen abgedeckt sein kann. Die Haftklebeschicht kann auf einer oder auf beiden Außenseiten der Bahn vorgesehen sein.

Im einzelnen gibt es eine Vielzahl von Möglichkeiten, ein erfindungsgemäßes Verfahren zur Herstellung einer Bahn und eine Bahn als solche auszugestalten und weiterzubilden, wobei einerseits auf die abhängigen Patentansprüche und andererseits auf die nachfolgende detaillierte Beschreibung bevorzugter Ausführungsbeispiele der Erfindung unter Bezugnahme auf die Zeichnung verwiesen wird. In der Zeichnung zeigt
- Fig. 1: eine schematische Darstellung einer Kalandriervorrichtung zur Inline-Herstellung einer Bahn mit zwei äußeren Schutzschichten und einer inneren Schutzschicht, einer inneren Funktionsschicht und einer inneren Verstärkungsschicht, und
- Fig. 2: eine schematische Querschnittsansicht eines Abschnittes einer fünfschichtigen Bahn, aufweisend zwei äußere Schutzschichten, eine innere Schutzschicht, eine Funktionsschicht und eine Verstärkungsschicht.

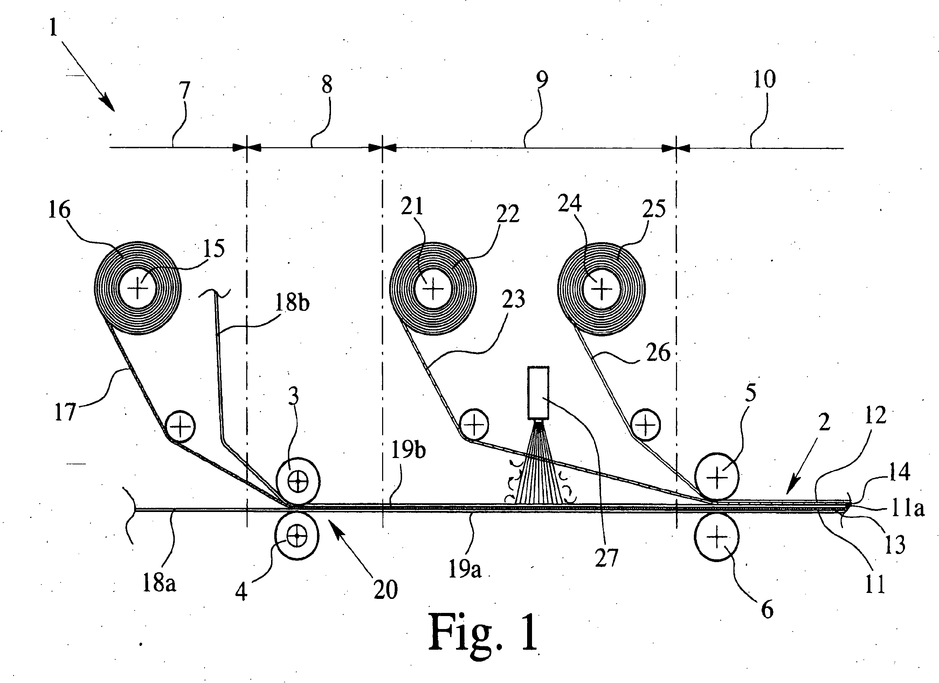

In Fig. 1 ist eine Kalandriervorrichtung 1 zur Herstellung einer erfindungsgemäßen Bahn 2 dargestellt. Die Kalandriervorrichtung 1 weist beheizte Kalanderwalzen 3, 4 und vorzugsweise nicht-beheizte Andrückwalzen 5, 6 auf und umfasst vier Sektionen 7 bis 10. Nachfolgend wird eine Ausführungsform eines erfindungsgemäßen Verfahrens zur Herstellung einer fünfschichtigen Bahn 2, die zwei äußere Schutzschichten 11, 12, eine innere Schutzschicht 11a, eine Funktionsschicht 13 und eine Verstärkungsschicht 14 aufweist, näher beschrieben.

Die erste Sektion 7 umfasst eine erste Rollenaufnahme 15, die eine Rolle 16 einer Folie 17 trägt. Die Folie 17 entspricht der Funktionsschicht 13 in der Bahn 2. Durch die Folie 17 wird sichergestellt, dass die Bahn 2 eine vorgesehene Funktionalität aufweist. Beispielsweise kann es sich bei der Folie 17 um ein gegenüber flüssigem Wasser dichtes Material handelt, das jedoch vorzugsweise wasserdampfdurchlässig und sauerstoffdurchlässig ist. Durch Verwendung der Folie 17 ist es daher möglich, eine Bahn 2 herzustellen, die atmungsaktiv ist, wobei unter den Begriff atmungsaktiv die Dichtigkeit der Bahn 2 gegenüber flüssigem Wasser und die Durchlässigkeit zumindest gegenüber Wasserdampf zu verstehen ist.

In der ersten Sektion 7 wird die Folie 17 und zwei Bahnen 18a, 18b aus ungebundenen Filamenten aus einem thermoplastischen Polymer für einen in der Sektion 8 dargestellten ersten Kalandriervorgang bereitgestellt. Die ungebundenen Filamente der Bahnen 18a, 18b werden in der Sektion 8 zwischen den Kalanderwalzen 3, 4 hindurchgeführt und dabei jeweils zu einem Vlies 19a, 19b verfestigt. Das Vlies 19a, 19b kann vorverfestigt sein, wobei die an sich aus dem Stand der Technik bekannten Verfahren zum Einsatz kommen können.

In der Sektion 8 werden die Folie 17 und die Bahnen 18a, 18b durch Inline-Kaschierung miteinander verbunden. Durch Thermokaschierung der Folie 17 und der Bahnen 18a, 18b wird in der Sektion 8 ein dreischichtiges Vorlaminat 20 erhalten. Eine Bahn 2 weist somit als Funktionsschicht 13 die Folie 17 und als erste äußere Schutzschicht 11 das Vlies 19a und als innere Schutzschicht 11a das Vlies 19b auf.

Die dritte Sektion 9 umfasst eine zweite Rollenaufnahme 21 für eine Rolle 22 eines vorzugsweise offenen Gewebes oder Geleges 23 aus Monofilamenten oder Multifilamenten oder eines extrudierten Netzes. Darüber hinaus umfasst die dritte Sektion 9 eine dritte Rollenaufnahme 24 für eine Rolle 25 eines Vliesstoffs 26. Erfindungsgemäß ist bei dem in der Fig. 1 dargestellten Herstellungsverfahren vorgesehen, dass das Vorlaminat 20 auf der Seite der inneren Schutzschicht 11a durch Wirbelstrombeauftragung mit einem Klebstoffauftrag versehen wird. Dazu ist in der Sektion 9 eine Sprühvorrichtung 27 vorgesehen, die bei der dargestellten Ausführungsform der Erfindung durch nicht im einzelnen dargestellte Öffnungen der Verstärkungsschicht 23 hindurch Klebstoffäden auf das Vorlaminat 20 aufsprüht. Dabei ist die Sprühvorrichtung 27 vorzugsweise derart angeordnet und ausgebildet, dass es zu einer Verwirbelung der Klebstoffäden im Bereich zwischen der inneren Schutzschicht 11 a und dem Gewebe oder Gelege 23 vor dem Eintritt in die Sektion 10 kommt. Dabei ist die Wirbelstrombeauftragung derart vorgesehen, dass durch die Verwirbelung zumindest auch an solchen Stellen der inneren Schutzschicht 11a Klebstoffäden aufgebracht werden, die unterhalb von nicht-geöffneten Bereichen des Gewebes oder Geleges 23 angeordnet sind. Gleichzeitig ist vorzugsweise vorgesehen, dass bei der Wirbelstrombeauftragung das Gewebe oder Gelege 23 zumindest bereichsweise auch auf der Seite des Vorlaminates 20 mit Klebstoffäden beauftragt wird. Im übrigen wird das Gewebe oder Gelege 23 von oben, d.h. auf der Außenseite, mit Klebstoffäden beauftragt. Die Sprühvorrichtung 27 kann hierzu mit nicht dargestellten Einrichtungen zur Erzeugung einer Wirbelströmung zusammenwirken.

In der Sektion 10 wird das Vorlaminat 20 mit dem Gewebe oder Gelege 23 und dem Vliesstoff 26 durch die Andrückwalzen 5, 6 hindurchgeführt und dabei über den auf das Vorlaminat 20 und das Gewebe oder Gelege 23 aufgebrachten Klebstoff in einem Verfahrensschritt, d.h. gleichzeitig, verklebt. Hierbei erfolgt die Verklebung vorzugsweise ohne thermische Behandlung des Klebstoffs und/oder der zu verklebenden Schichten. Eine Verschweißung des Gewebes oder Geleges 23 mit dem Vorlaminat 20 und dem Vliesstoff 26 ist vorzugsweise nicht vorgesehen, um eine Beschädigung der das Gewebe oder Gelege 23 bildenden Filamente oder Bändchen oder der Funktionsschicht weitgehend ausschließen zu können. Die so erhaltene Bahn 2 weist als Verstärkungsschicht 14 das Gewebe oder Gelege 23 auf.

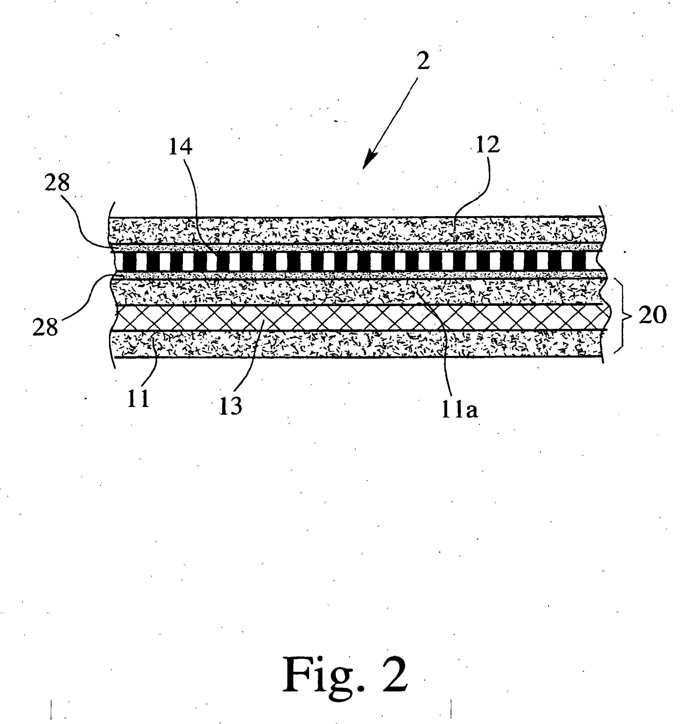

In Fig. 2 ist ein Ausschnitt der Bahn 2 im Querschnitt dargestellt. Die Bahn 2 weist äußere Schutzschichten 11, 12, die Funktionsschicht 13, die Verstärkungsschicht 14 und eine innere Schutzschicht 11a zwischen der Verstärkungsschicht 14 und der Funktionsschicht 13 auf. Die äußeren Schutzschichten 11, 12 sind im wesentlichen zum Schutz der Funktionsschicht 13 gegen Abrieb vorgesehen. Die innere Schutzschicht 11a schützt die Funktionsschicht 13 gegen eine Beschädigung durch die relativ groben Filamente der Verstärkungsschicht 14, insbesondere an deren Knotenpunkten. Die Verstärkungsschicht 14 stellt dagegen eine hohe Reißfestigkeit der Bahn 2 sicher. Dabei ist die Verstärkungsschicht 14 mit der inneren Schutzschicht 11a und der äußeren Schutzschicht 12 jeweils über eine Klebstoffschicht 28 verklebt, wobei die Dicke der Klebstoffschicht 28 auch viel geringer sein kann, als dies in Fig. 2 dargestellt ist.

Als erste äußere Schutzschicht 11 und/oder als innere Schutzschicht 11 a kann ein durch thermische, chemische oder mechanische Verfestigung erhältliches Spinnvlies oder Stapelfaservlies oder ein weitgehend geschlossenes Gewebe eingesetzt werden. Das Mindestflächengewicht der Schutzschicht 11, 11a beträgt 5 g/m². Vorzugsweise weist die erste äußere Schutzschicht 11 ein Flächengewicht von 15 bis 300 g/m² auf, insbesondere bis 100 g/m² auf. Zur Herstellung der ersten äußeren Schutzschicht 11, 11a kann ein thermoplastisches Polymer, vorzugsweise Polypropylen, Polyethylen oder Polyethylenterephtalat, Polyester oder Polyamid, eingesetzt werden. Grundsätzlich ist es natürlich auch möglich, andere Materialien einzusetzen, die zu einem Schutz der Funktionsschicht 13 beitragen können und in geeigneter Weise mit der Funktionsschicht 13 verbindbar sind. Als Material für die äußere weitere Schutzschicht 12 kann dasselbe Material eingesetzt werden, aus dem die Schutzschicht 11, 11a hergestellt ist.

Bei der Funktionsschicht 13 kann es sich um eine mono- oder biaxial verstreckte Folie oder eine nicht-verstreckte Folie handeln oder auch um ein Feinfaservlies. Das Flächengewicht der Funktionsschicht 13 beträgt vorzugsweise 15 bis 80 g/m². Die Funktionsschicht 13 kann aus Polypropylen, Polyethylen, Polyester, Polyamid oder Polyurethan hergestellt sein.

Bei der Verstärkungsschicht 14 kann es sich um ein vorzugsweise offenes Gelege oder Gewebe aus Monofilamenten oder Multifilamenten oder um ein extrudiertes Netz handeln. Die Verstärkungsschicht 14 kann Glasfasern oder Naturfasern aufweisen. Die Verstärkungsschicht 14 weist vorzugsweise ein Flächengewicht von 5 bis 100 g/m² auf. Vorzugsweise kann die Verstärkungsschicht 14 aus einem Polymer hergestellt sein, wobei grundsätzlich auch andere Materialien einsetzbar sind. Die nachfolgend angegebenen bevorzugten Ausführungsbeispiele der Erfindung beziehen sich auf eine Bahn mit einem vierschichtigen Aufbau.

### Ausführungsbeispiel 1:

Das Vorlaminat 20 weist als äußere Schutzschicht 11 ein thermokalandriertes Spinnvlies aus Polypropylen mit einem Flächengewicht von 200 g/m² auf. Als Funktionsschicht 13 ist ein extrudierter, monoaxial verstreckter Film aus Polypropylen und Kreide mit einem Flächengewicht von 40 g/m² vorgesehen, der wasserdicht (Wassersäule > 1500 mm) und wasserdampfdurchlässig (1240 g/m² * 24h) ist. Die äußere Schutzschicht 11 und die Funktionsschicht 13 werden durch Offline-Thermokaschierung mittels zweier beheizter Walzen zu einem Vorlaminat 20 (Wassersäule > 1500 mm, Wasserdampfdurchlässigkeit 1180 g/m² * 24h) verschweißt. Als Verstärkungsschicht 14 ist ein Drehergewebe aus Polypropylen mit einem Flächengewicht von 30 g/m² vorgesehen. Die Verstärkungsschicht 14 wird mit dem Vorlaminat 20 und der äußeren Schutzschicht 12 in einem Arbeitsgang verklebt, wobei 9 g/m² eines Klebstoffes bei 140°C durch Wirbelstrombeauftragung aufgesprüht werden. Der Klebstoff weist ein amorphes Polyalphaolefin auf. Dabei handelt es sich bei der weiteren Schutzschicht 12 um ein Polypropylen-Vlies mit einem Flächengewicht von 30 g/m². Das so erhaltene Band ist wasserdicht (Wassersäule > 1500 mm) und wasserdampfdurchlässig (1075 g/m² * 24h).

### Ausführungsbeispiel 2:

Bei der äußeren Schutzschicht 11 handelt es sich um ein Polypropylen-Spinnvlies mit einem Flächengewicht von 50 g/m². Als Funktionsschicht 13 wird ein zuvor hergestellter extrudierter, monoaxial verstreckter Film aus Polypropylen und Kreide mit einem Flächengewicht von 40 g/m² eingesetzt. Die Funktionsschicht 13 ist wasserdicht (Wassersäule > 1500 mm) und wasserdampfdurchlässig (1240 g/m² * 24h). Die äußere Schutzschicht 11 und die Funktionsschicht 13 werden durch Inline-Thermokaschierung mittels zweier beheizter Walzen miteinander verschweißt. Das so erhaltene Vorlaminat 20 ist wasserdicht (Wassersäule des Laminats > 1500 mm) und wasserdampfdurchlässig (1150 g/m² * 24h). Als Verstärkungsschicht 14 ist ein Polypropylen-Flachgewebe mit einem Flächengewicht von 14 g/m² vorgesehen, das mit dem Vorlaminat 20 und der weiteren Schutzschicht 12 in einem Arbeitsgang verklebt wird. Dabei werden 8 g/m² Klebstoff mit einer Temperatur von 140°C durch Wirbelstrombeauftragung aufgesprüht. Der Klebstoff weist amorphes Polyalphaolefin auf. Bei der weiteren äußeren Schutzschicht 12 handelt es sich um ein thermokalandriertes Polypropylen-Vlies mit einem Flächengewicht von 15 g/m². Das Band 2 ist wasserdicht (Wassersäule > 1500 mm) und wasserdampfdurchtässig (1060 g/m² * 24h).

### Ausführungsbeispiel 3:

Als äußere Schutzschicht 11 ist ein Polypropylen-Spinnvlies mit einem Flächengewicht von 70 g/m² vorgesehen. Bei der Funktionsschicht 13 handelt es sich um einen zuvor hergestellten extrudierten, biaxial verstreckten Film aus Polypropylen und Kreide mit einem Flächengewicht von 25 g/m². Der Film ist wasserdicht (Wassersäule > 1500 mm) und wasserdampfdurchlässig (1450 g/m² * 24h). Die äußere Schutzschicht 11 und die Funktionsschicht 13 werden durch Inline-Thermokaschierung mittels zweier beheizter Walzen miteinander verschweißt. Das so erhaltene Vorlaminat 20 ist wasserdicht (Wassersäule > 1500 mm) und wasserdampfdurchlässig (1370 g/m²* 24h). Als Verstärkungsschicht 14 ist ein Polypropylen-Flachgewebe mit einem Flächengewicht von 14 g/m² vorgesehen. Die Verstärkungsschicht 14 wird mit dem Vorlaminat 20 und der weiteren äußeren Schutzschicht 12 direkt nach der Verschweißung der äußeren Schutzschicht 11 und der Funktionsschicht 13 miteinander verklebt. Dabei werden 5 g/m² vernetzender Kleber auf der Basis eines amorphen Polyalphaolefins mit 160°C durch Wirbelstrombeauftragung aufgesprüht. Als weitere Schutzschicht 12 ist ein thermokalandriertes Polypropylen-Vlies mit einem Flächengewicht von 30 g/m² vorgesehen, das mit dem dreischichtigen Verbund aus dem Vorlaminat 20 und der Verstärkungsschicht 14 gleichzeitig verklebt wird. Das so erhaltene Band 2 ist wasserdicht (Wassersäule > 1500 mm) und wasserdampfdurchlässig (1305 g/m² * 24h).

### Ausführungsbeispiel 4:

Als äußere Schutzschicht 11 wird ein zuvor hergestelltes thermokalandriertes Stapelfaservlies aus Polypropylen mit einem Flächengewicht von 40 g/m² eingesetzt. Bei der Funktionsschicht 13 handelt es sich um einen zuvor hergestellten extrudierten, monoaxial verstreckten Film aus Polypropylen und Kreide mit einem Flächlengewicht von 40 g/m². Der Film ist wasserdicht (Wassersäule > 1500 mm) und wasserdampfdurchlässig (1240 g/m² * 24h). Die äußere Schutzschicht 11 und die Funktionsschicht 13 werden durch Offline-Thermokaschierung mittels Ultraschall verschweißt. Das so erhaltene Vorlaminat 20 ist wasserdicht (Wassersäule > 1500 mm) und wasserdampfdurchlässig (1220 g/m² * 24h). Als Verstärkungsschicht 14 wird ein Polypropylen-Drehergewebe mit einem Flächengewicht von 30 g/m² vorgesehen. Die Verstärkungsschicht 14 wird mit dem Vorlaminat 20 und einer weiteren Schutzschicht 12 in einem Arbeitsgang verklebt. Dabei werden 6 g/m² vernetzender Kleber auf der Basis eines amorphen Polyalphaolefins mit 160°C durch Wirbelstrombeauftragung aufgesprüht. Als weitere äußere Schutzschicht 12 wird ein vernadeltes Polypropylen-Vlies mit einem Flächengewicht von 90 g/m² eingesetzt. Das so erhaltene Band 2 ist wasserdicht (Wassersäule > 1500 mm) und wasserdampfdurchlässig (1125 g/m² * 24h).

### Ausführungsbeispiel 5:

Als äußere Schutzschicht 11 wird ein Polyethylen-Spinnvlies mit einem Flächengewicht von 60 g/m² eingesetzt. Bei der Funktionsschicht 13 handelt es sich um einen zuvor hergestellten extrudierten, monoaxial verstreckten Film aus Polyethylen und Kreide mit einem Flächengewicht von 30 g/m². Der Film ist wasserdicht (Wassersäule > 1500 mm) und wasserdampfdurchlässig (1730 g/m² * 24h). Die äußere Schutzschicht 11 und die Funktionsschicht 13 werden durch Inline-Thermokaschierung mittels zweier beheizter Walzen miteinander verschweißt. Das so erhaltene Vorlaminat 20 ist wasserdicht (Wassersäule > 1500 mm) und wasserdampfdurchlässig (1610 g/m² * 24h). Als Verstärkungsschicht 14 wird ein Polyethylen-Gelege eingesetzt, das Monofilamente mit einem Durchmesser von 0,43 mm aufweist. Das Gelege weist ein Flächengewicht von 30 g/m² auf. Die Verstärkungsschicht 14 wird mit dem Vorlaminat 20 und der weiteren äußeren Schutzschicht 12 in einem Arbeitsgang verklebt. Dabei wird 10 g/m² Klebstoff auf der Basis eines Ethylenvinylacetat-Copolymers mit 130°C durch Wirbelstrombeauftragung aufgesprüht. Als weitere Schutzschicht 12 wird ein thermokalandriertes Polyethylen-Spinnvlies mit einem Flächengewicht von 30 g/m² eingesetzt. Das so erhaltene Band 2 ist wasserdicht (Wassersäule > 1500 mm) und wasserdampfdurchlässig (1545 g/m² * 24h).

### Ausführungsbeispiel 6:

Als äußere Schutzschicht 11 wird ein zuvor hergestelltes wasserstrahlverfestigtes Polypropylen-Spinnvlies mit einem Flächengewicht von 50 g/m² eingesetzt. Bei der Funktionsschicht 13 handelt es sich um einen zuvor hergestellten extrudierten, monoaxial verstreckten Film aus Polypropylen und Kreide mit einem Flächengewicht von 50 g/m². Der Film ist wasserdicht (Wassersäule > 1500 mm) und wasserdampfdurchlässig (365 g/m² * 24h). Die äußere Schutzschicht 11 und die Funktionsschicht 13 werden durch Offline-Thermokaschierung mittels Ultraschall verschweißt. Das so erhaltene Vorlaminat 20 ist wasserdicht (Wassersäule > 1500 mm) und wasserdampfdurchlässig (315 g/m² * 24h). Als Verstärkungsschicht 14 ist ein Polyester-Gelege aus Multifilamenten mit einem Flächengewicht von 55 g/m² vorgesehen. Die Verstärkungsschicht 14 wird mit dem Vorlaminat 20 und der weiteren Schutzschicht 12 in einem Arbeitsgang verklebt. Dabei werden 6 g/m² Klebstoff auf der Basis eines Ethylenvinylacetat-Copolymers durch ein Pulverstreuverfahren aufgebracht, wobei es zu einer elektrostatischen Aufladung der Schichten kommt. Als weitere Schutzschicht 12 wird ein wasserstrahlverfestigtes Polypropylen-Spinnvlies mit einem Flächengewicht von 50 g/m² eingesetzt. Das so erhaltene Band 2 ist wasserdicht (Wassersäule > 1500 mm) und wasserdampfdurchlässig (1125 g/m² * 24h).

Im übrigen lässt es die Erfindung bedarfsweise zu, die in den Ansprüchen und/oder die anhand der Zeichnung und/oder der Ausführungsbeispiele offenbarten und beschriebenen Merkmale miteinander zu kombinieren, auch wenn dies im einzelnen nicht beschrieben ist. Dabei ist die Erfindung nicht auf die dargestellten und beschriebenen Ausführungsformen und -beispiele beschränkt. Die vorstehenden Werteangaben und die angegebenen Intervalle erfassen jeweils sämtliche Werte, also nicht nur die Untergrenzen bzw. bei Intervallen die Intervallgrenzen, ohne das dies einer ausdrücklichen Erwähnung bedarf.

## Patentansprüche

1. Verfahren zur Herstellung einer Bahn (2), wobei die Bahn eine Schutzschicht (11), eine Funktionsschicht (13) und eine Verstärkungsschicht (14) aufweist, wobei die Verstärkungsschicht (14) eine höhere Reißfestigkeit als die Schutzschicht (11) aufweist und wobei die Verstärkungsschicht (14) mit der Funktionsschicht (13) verklebt wird, wobei zur Herstellung eines Vorlaminates (20) die Funktionsschicht (13) einseitig mit der Schutzschicht (11) durch Thermokaschierung verschweißt wird, und wobei das so erhaltene Vorlaminat (20) anschließend auf der Seite der Funktionsschicht (13) mit der Verstärkungsschicht (14) verklebt wird, und wobei die Verstärkungsschicht (14) mit einer weiteren Schicht (12) verklebt wird, wobei die gemeinsamen Berührungsflächen der Verstärkungsschicht (14) und der weiteren Schicht (12) im wesentlichen vollflächig miteinander verklebt werden, und wobei in einem Verfahrensschritt das Vorlaminat (20) mit der Verstärkungsschicht (14) und die Verstärkungsschicht (14) mit der weiteren Schicht (12) verklebt werden, wobei der Klebstoff durch Öffnungen der Verstärkungsschicht (14) hindurch auf die Funktionsschicht (13) aufgebracht wird.

2. Verfahren zur Herstellung einer Bahn (2), wobei die Bahn Schutzschichten (11, 11 a), eine Funktionsschicht (13) und eine Verstärkungsschicht (14) aufweist, wobei die Verstärkungsschicht (14) eine höhere Reißfestigkeit als die Schutzschichten (11, 11a) aufweist und wobei die Verstärkungsschicht (14) mit der inneren Schutzschicht (11a) verklebt wird, wobei zur Herstellung eines Vorlaminates (20) die Funktionsschicht (13) auf beiden Seiten mit einer der Schutzschichten (11, 11a) durch Thermokaschierung verschweißt wird, und wobei das so erhaltene Vorlaminat (20) anschließend mit der Verstärkungsschicht (14) verklebt wird, und wobei die Verstärkungsschicht (14) mit einer weiteren Schicht (12) verklebt wird, wobei die gemeinsamen Berührungsflächen der Verstärkungsschicht (14) und der weiteren Schicht (12) im wesentlichen vollflächig miteinander verklebt werden, und wobei in einem Verfahrensschritt das Vorlaminat (20) mit der Verstärkungsschicht (14) und die Verstärkungsschicht (14) mit der weiteren Schicht (12) verklebt werden, wobei der Klebstoff durch Öffnungen der Verstärkungsschicht (14) hindurch auf die innere Schutzschicht (11a) aufgebracht wird.

3. Verfahren nach einem der vorhergehenden Ansprüche, **dadurch gekennzeichnet, dass** die Thermokaschierung Inline ausgeführt wird.

4. Verfahren nach einem der vorhergehenden Ansprüche, **dadurch gekennzeichnet, dass** die weitere Schicht (12) als weitere Schutzschicht ausgebildet ist.

5. Verfahren nach einem der vorhergehenden Ansprüche, **dadurch gekennzeichnet, dass** ein Klebstoff derart auf die Funktionsschicht (13) oder die innere Schutzschicht (11a) und/oder auf die Verstärkungsschicht (14) aufgesprüht oder aufgestreut und derart verwirbelt wird, dass sich ein im wesentlichen vollflächiger Klebstoffauftrag auf der Berührungsfläche der Funktionsschicht (13) oder der innere Schutzschicht (11a) und/oder der Verstärkungsschicht (14) ergibt, und dass beim nachfolgenden Verbinden der Verstärkungsschicht (14) mit der Funktionsschicht (13) oder mit der inneren Schutzschicht (11a) gemeinsame Berührungsflächen der verbundenen Schichten (11a, 13, 14) im wesentlichen vollflächig miteinander verklebt werden.

6. Verfahren nach einem der Ansprüche 1 bis 5, **dadurch gekennzeichnet, dass** der Klebstoff derart auf die Funktionsschicht (13) oder die innere Shutzschicht (11a) und/oder auf die Verstärkungsschicht (14) aufgesprüht oder aufgestreut und die Funktionsschicht (13) oder die innere Schutzschicht (11a) und/oder die Verstärkungsschicht (14) derart elektrostatisch aufgeladen werden, dass sich ein im wesentlichen vollflächiger Klebstoffauftrag auf den Berührungsflächen ergibt, und dass beim nachfolgenden Verbinden der Verstärkungsschicht (14) mit der Funktionsschicht (13) oder mit der inneren Schutzschicht (11a) gemeinsame Berührungsflächen der verbundenen Schichten (11a, 13, 14) im wesentlichen vollflächig miteinander verklebt werden.

7. Verfahren nach einem der Ansprüche 5 oder 6, **dadurch gekennzeichnet, dass** der Klebstoff durch Öffnungen der Verstärkungsschicht (14) hindurch auf die Funktionsschicht (13) oder die innere Schutzschicht (11a) und/oder auf die Verstärkungsschicht (14) aufgebracht wird.

8. Verfahren nach einem der Ansprüche 5 bis 7, **dadurch gekennzeichnet, dass** vorzugsweise in einem Verfahrensschritt auf beide Schichtseiten der Verstärkungsschicht (14) ein Klebstoff aufgetragen wird.

9. Verfahren nach einem der vorhergehenden Ansprüche 5 bis 8, **dadurch gekennzeichnet, dass** der Klebstoff derart aufgebracht wird, dass sich eine diffusionsoffene Bahn (2) ergibt.

## Claims

1. A method for making a web (2), the web having a protective layer (11), a functional layer (13), and a reinforcing layer (14), the reinforcing layer (14) having greater tearing resistance than the protective layer (11), and wherein the reinforcing layer (14) is glued together with the functional layer (13), wherein for making a prelaminate (20), the functional layer (13) is welded together on one side with the protective layer (11) by thermal lamination, and wherein the prelaminate (20) thus obtained is then glued together with the reinforcing layer (14) on the side of the functional layer (13), and wherein the reinforcing layer (14) is glued together with a further layer (12), with the common contact surfaces of the reinforcing layer (14) and the other layer (12) being glued together substantially all-over, and wherein in one procedure step, the prelaminate (20) is glued together with the reinforcing layer (14) and the reinforcing layer (14) with the further layer (12), the adhesive being applied to the functional layer (13) through openings of the reinforcing layer (14).

2. A method for making a web (2), the web having protective layers (11, 11 a), a functional layer (13), and a reinforcing layer (14), the reinforcing layer (14) having greater tearing resistance than the protective layers (11, 11a), and wherein the reinforcing layer (14) is glued together with the internal protective layer (11a), wherein for making a prelaminate (20), the functional layer (13) is welded together on both sides with one of the protective layers (11, 11a) by thermal lamination, and wherein the prelaminate (20) thus obtained is then glued together with the reinforcing layer (14), and wherein the reinforcing layer (14) is glued together with a further layer (12), the common contact surfaces of the reinforcing layer (14) and the further layer (12) being glued together substantially all-over, and wherein in one procedure step, the prelaminate (20) is glued together with the reinforcing layer (14) and the reinforcing layer (14) with the further layer (12), the adhesive being applied to the internal protective layer (11a) through openings of the reinforcing layer (14).

3. The method according to any of the preceding claims, **characterized in that** thermal lamination is performed in-line.

4. The method according to any of the preceding claims, **characterized in that** the further layer (12) is embodied as a further protective layer.

5. The method according to any of the preceding claims, **characterized in that** an adhesive is sprayed or sprinkled onto the functional layer (13) or the internal protective layer (11a) and/or the reinforcing layer (14) and swirled so that a substantially all-over adhesive application results on the contact surface of the functional layer (13) or the internal protective layer (11 a) and/or the reinforcing layer (14), and that upon consecutive joining of the reinforcing layer (14) to the functional layer (13) or the internal protective layer (11a), common contact surfaces of the joined layers (11 a, 13, 14) are glued together substantially all-over.

6. The method according to any of claims 1 to 5, **characterized in that** the adhesive is sprayed or sprinkled onto the functional layer (13) or the internal protective layer (11a) and/or onto the reinforcing layer (14), and the functional layer (13) or the internal protective layer (11a) and/or the reinforcing layer (14) are charged electrostatically so that a substantially all-over adhesive application is produced on the contact surfaces, and that upon consecutive joining of the reinforcing layer (14) to the functional layer (13) or the internal protective layer (11a), common contact surfaces of the joined layers (11a, 13, 14) are glued together substantially all-over.

7. The method according to any of claims 5 or 6, **characterized in that** the adhesive is applied to the functional layer (13) or the internal protective layer (11a) and/or the reinforcing layer (14) through openings of the reinforcing layer (14).

8. The method according to any of claims 5 to 7, **characterized in that** preferably in one procedure step, an adhesive is applied to both layer sides of the reinforcing layer (14).

9. The method according to any of the preceding claims 5 to 8, **characterized in that** the adhesive is applied so that a diffusion-open web (2) is produced.

## Revendications

1. Procédé permettant la réalisation d'une bande (2), ladite bande comportant une couche de protection (11), une couche fonctionnelle (13) et une couche de renfort (14), ladite couche de renfort (14) ayant une résistance au déchirement plus élevée que la couche de protection (11), et ladite couche de renfort (14) étant collée à la couche fonctionnelle (13), la couche fonctionnelle (13) étant soudée sur une face à la couche de protection (11) par contrecollage thermique en vue de la réalisation d'un stratifié préliminaire (20), ledit stratifié préliminaire (20) ainsi obtenu étant ensuite collé par la face de la couche fonctionnelle (13) à la couche de renfort (14), et ladite couche de renfort (14) étant collée à une couche (12) supplémentaire, les surfaces de contact communes de la couche de renfort (14) et de la couche (12) supplémentaire étant collées l'une à l'autre sensiblement sur toute la surface, et, dans une étape du procédé, le stratifié préliminaire (20) étant collé à la couche de renfort (14) et la couche de renfort (14) étant collée à la couche (12) supplémentaire, la matière adhésive étant appliquée sur la couche fonctionnelle (13) en la faisant passer au travers des orifices de la couche de renfort (14).

2. Procédé permettant la fabrication d'une bande (2), ladite bande comportant des couches de protection (11, 11 a), une couche fonctionnelle (13) et une couche de renfort (14), ladite couche de renfort (14) ayant une résistance au déchirement plus élevée que les couches de protection (11, 11a) et ladite couche de renfort (14) étant collée à la couche de protection (11a) intérieure, la couche fonctionnelle (13) étant soudée sur les deux faces à l'une des couches de protection (11, 11a) par contrecollage thermique en vue de la réalisation d'un stratifié préliminaire (20), ledit stratifié préliminaire (20) ainsi obtenu étant collé ensuite à la couche de renfort (14), et ladite couche de renfort (14) étant collée à une couche (12) supplémentaire, les surfaces de contact communes de la couche de renfort (14) et de la couche (12) supplémentaire étant collées l'une à l'autre sensiblement sur toute la surface, et, dans une étape du procédé, le stratifié préliminaire (20) étant collé à la couche de renfort (14) et la couche de renfort (14) étant collée à la couche (12) supplémentaire, la matière adhésive étant appliquée sur la couche de protection (11a) intérieure en la faisant passer au travers des orifices de la couche de renfort (14).

3. Procédé selon l'une quelconque des revendications précédentes, **caractérisé en ce que** le contrecollage thermique est réalisé en ligne.

4. Procédé selon l'une quelconque des revendications précédentes, **caractérisé en ce que** la couche (12) supplémentaire est réalisée sous la forme d'une couche de protection supplémentaire.

5. Procédé selon l'une quelconque des revendications précédentes, **caractérisé en ce qu'**une matière adhésive est pulvérisée ou répandue sur la couche fonctionnelle (13) ou la couche de protection (11a) intérieure et/ou sur la couche de renfort (14) et est fluidisée de manière à appliquer la matière adhésive sensiblement sur toute la surface des surfaces de contact de la couche fonctionnelle (13) ou de la couche de protection (11a) intérieure et/ou de la couche de renfort (14), et **en ce que**, lors de la liaison consécutive de la couche de renfort (14) avec la couche fonctionnelle (13) ou avec la couche de protection (11a) intérieure, des surfaces de contact communes des couches (11a, 13, 14) liées sont collées entre elles sensiblement sur toute la surface.

6. Procédé selon l'une quelconque des revendications 1 à 5, **caractérisé en ce que** la matière adhésive est pulvérisée ou répandue sur la couche fonctionnelle (13) ou la couche de protection (11a) intérieure et/ou sur la couche de renfort (14), et la couche fonctionnelle (13) ou la couche de protection (11a) intérieure et/ou la couche de renfort (14) reçoivent une charge électrostatique de telle sorte que la matière adhésive est déposée sensiblement sur toute la surface des surfaces de contact, et **en ce que**, lors de la liaison consécutive de la couche de renfort (14) avec la couche fonctionnelle (13) ou avec la couche de protection (11a) intérieure, des surfaces de contact communes des couches (11a, 13, 14) liées sont collées entre elles sensiblement sur toute la surface.

7. Procédé selon la revendication 5 ou 6, **caractérisé en ce que** la matière adhésive est appliquée sur la couche fonctionnelle (13) ou la couche de protection (11a) intérieure et/ou sur la couche de renfort (14) en la faisant passer au travers des orifices de la couche de renfort (14).

8. Procédé selon l'une quelconque des revendications 5 à 7, **caractérisé en ce que**, de préférence dans une étape du procédé, une matière adhésive est appliquée sur les deux faces de la couche de renfort (14).

9. Procédé selon l'une quelconque des revendications précédentes 5 à 8, **caractérisé en ce que** la matière adhésive est appliquée de manière à obtenir une bande (2) ouverte à la diffusion.
